# EUROPEAN PATENT APPLICATION

(11) **EP 4 751 876 A2**
(43) Date of publication of application: **03.06.2026**
(21) Application number: 25218264.7
(22) Date of filing: 25.11.2025
(51) Int. Cl.: B29C 49/00, C08K 3/04, C08L 67/02, C08G 63/685, C08G 63/91, C08L 79/08, B29C 49/06, B29C 45/04, B29C 49/12, B29B 9/06, B29C 48/00, B29C 48/04, B29C 48/05, B29C 48/88, B29C 49/08, C08G 81/00, C08G 63/183, C08G 63/189

(54) **RESIN MIXTURE, PREFORM, BIAXIALLY ORIENTED MOLDED ARTICLE, RESIN PELLET AND METHOD FOR PRODUCING BIAXIALLY ORIENTED MOLDED ARTICLE**

(30) Priority: 27.11.2024 JP 2024206463
(71) Applicant: Canon Kabushiki Kaisha, Tokyo, 146-8501 (JP)
(72) Inventor: DOI, Yohei, Tokyo, 146-8501 (JP); ASHIBE, Tsunenori, Tokyo, 146-8501 (JP)
(74) Representative: TBK

(57) **Abstract**

A resin mixture which includes a resin of a recycled material or a resin of a virgin material and carbon black added to the resin and can make a biaxially oriented molded article by a stretch blow molding method. A resin mixture includes a binder resin, carbon black and a compound having a carbodiimide group. The mass of the carbon black is 1.0 part by mass or more and 20.0 parts by mass or less, and the mass of the compound having a carbodiimide group is 3.0 parts by mass or more and 64.0 parts by mass or less, based on 100 parts by mass of the binder resin.

## Description

### TECHNICAL FIELD

The present disclosure relates to a resin mixture, a preform, a biaxially oriented molded article, a resin pellet and a method for producing a biaxially oriented molded article.

### BACKGROUND

A toner bottle for feeding toner, etc., in an electrophotographic image forming apparatus needs strength by which the toner bottle does not break even when dropped, and therefore, a large number of molded articles obtained by injection stretch blow molding polyethylene terephthalate (also referred to as "PET" hereinafter) that is a polyester resin are used (Japanese Patent Laid-Open No. 2001-42626).

In order to enhance designability, these toner bottles are sometimes colored black by adding carbon black to the PET resin. Moreover, in order to enhance light blocking properties not only for toner bottles, it is also demanded that containers, to which carbon black has been added, should be produced by injection stretch blow molding.

An injection stretch blow-molded bottle using a PET resin is produced by a method of inflating an injection molded article having a shape like a test tube, which is called a preform, at a prescribed temperature (about 100°C) with a gas, and the preform which has been injection molded desirably is non-crystal or has a low degree of crystallinity. If the degree of crystallinity of the preform is high, the preform becomes hard and is difficult to inflate, so that the bottle is sometimes likely to explode during molding.

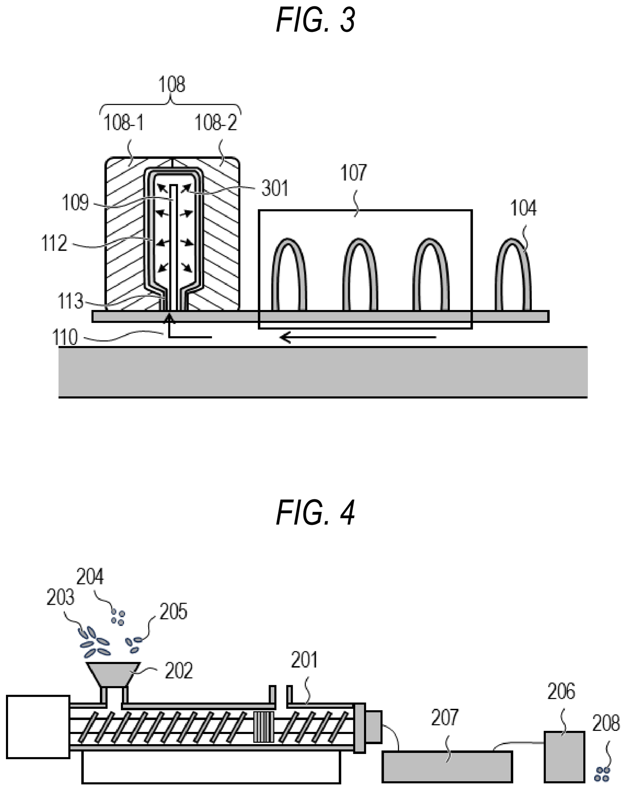

However, when a toner bottle is colored black by using carbon black, the carbon black is likely to become a crystal nucleus because the carbon black as a colorant (pigment) for coloring the bottle black is a fine particle, and crystallization rate of PET is sometimes increased (in a case of talc described in The Nikkan Kogyo Shimbun, Ltd., Saturated polyester resin handbook, edited by Kazuo Yuki, Dec. 22, 1989, the first edition, pp. 224-225, Figure 4.15), so that the preform is crystallized, and the bottle is sometimes likely to explode during blow molding.

In recent years, furthermore, thinning of a molded article obtained by injection stretch blow molding has been carried out from a viewpoint of environmental protection (Japanese Patent Laid-Open No. 2009-262947). Regarding this thinned stretch blow-molded article, an influence of crystallization becomes marked as the molded article is thinned, and even in a case of a small amount of crystallization, explosion occurs. The PET resin which has been colored black with carbon black is likely to be crystallized originally, and because of black-coloring and thinning, crystallization of the preform is likely to further proceed, so that injection stretch blow molding is extremely difficult.

In addition, obtaining of a molded article from a used PET material by performing injection stretch blow molding again has been carried out (Japanese Patent Laid-Open No. 2007-206390). When the used PET material is used, that is, when pellets of the PET material obtained by material recycling are used, the PET material is hydrolyzed in the recycling process, and molecular weight is sometimes decreased.

The material of the PET resin which is decreased in a molecular weight tends to be crystallized (The Nikkan Kogyo Shimbun, Ltd., Saturated polyester resin handbook, edited by Kazuo Yuki, Dec. 22, 1989, the first edition, pp. 224-225, Figure 4.14), and the preform is crystalized during stretch blow molding to easily cause occurrence of explosion. If the preform is colored black with carbon black, crystallization of the preform is likely to further proceed, and hence, injection stretch blow molding using recycled PET which has been colored black with carbon black is extremely difficult.

As a method of compensating for these shortcomings, replacement of the carbon black with a black dye is sometimes carried out. However, the dye sometimes causes a see-through container or causes a faded container when exposed to light. As a method of compensating for shortcomings of the material recycled material, repolymerization is carried out through solid phase polymerization, and thereby the molecular weight can be recovered (Japanese Patent Laid-Open No. 2000-169623). However, the solid phase polymerization needs much thermal energy and has heavy environmental impact.

As described above, for the thin PET blow-molded article to which carbon black has been added, molding is difficult, and application of a recycled material which has been decreased in the molecular weight is difficult.

In a conventional example described in Japanese Patent Laid-Open No. 2009-262947 above, if carbon black is added to the PET resin, the carbon black becomes a crystal nucleus, and the preform is crystallized. The thin blow-molded article is greatly influenced by crystallization, and even in a case of a slight amount of crystallization, the preform explodes during the injection stretch blow molding. Even when blow molding can be carried out, thickness unevenness becomes large. Thus, a thin blow-molded article containing carbon black added has been unable to be obtained.

In a conventional example described in Japanese Patent Laid-Open No. 2007-206390, if carbon black is added to the PET resin, crystallization of the preform proceeds because the molecular weight of the recycled material has been decreased, and the preform explodes during the injection stretch blow molding. Even when blow molding can be carried out, thickness unevenness becomes large. Thus, by using a recycled material as a raw material, a blow-molded article containing carbon black added has been unable to be obtained.

### SUMMARY

Therefore, the present disclosure is directed to providing a resin mixture in which carbon black has been added to a resin of a recycled material or a resin of a virgin material and which can make a biaxially oriented molded article by a stretch blow molding method.

For solving the above disadvantage, the present disclosure is a resin mixture including a binder resin, carbon black and a compound having a carbodiimide group, wherein mass of the carbon black is 1.0 part by mass or more and 20.0 parts by mass or less, and mass of the compound having a carbodiimide group is 3.0 parts by mass or more and 64.0 parts by mass or less, based on 100 parts by mass of the binder resin.

Further, the present disclosure is a preform including the above resin mixture and a polyester resin.

Furthermore, the present disclosure is a biaxially oriented molded article including the above resin mixture and a polyester resin.

Furthermore, the present disclosure is a resin pellet including the above resin mixture.

Furthermore, the present disclosure is a method for producing a biaxially oriented molded article, including making a resin pellet from a resin mixture, making a preform from the resin pellet and a polyester resin, and blow molding the preform, wherein the resin mixture includes a binder resin, carbon black and a compound having a carbodiimide group, and mass of the carbon black is 1.0 part by mass or more and 20.0 parts by mass or less, and mass of the compound having a carbodiimide group is 3.0 parts by mass or more and 64.0 parts by mass or less, based on 100 parts by mass of the binder resin.

According to an embodiment of the present disclosure, a masterbatch colored with carbon black, which can suppress the degree of crystallinity of a preform, can be provided in the injection stretch blow molding of a thin PET resin, and hence, a biaxially oriented molded article of a thin and black-colored PET resin can be obtained.

In addition, a masterbatch colored with carbon black, which can suppress the degree of crystallinity of a preform, can be provided in the injection stretch blow molding of a low-molecular weight recycled PET resin, and hence, an injection stretch blow-molded article which uses the low-molecular weight recycled PET resin as a raw material and has been colored black can be obtained.

Features of the present disclosure will become apparent from the following description of embodiments with reference to the attached drawings. The following description of embodiments is described by way of example.

### BRIEF DESCRIPTION OF THE DRAWINGS

Fig. 1 is a schematic view of an image forming apparatus according to the present disclosure.
Fig. 2 is a schematic view illustrating a method for molding a preform according to the present disclosure.
Fig. 3 is a schematic view illustrating a blow molding method according to the present disclosure.
Fig. 4 is a schematic view of a twin-screw extruder according to the present disclosure.
Fig. 5 is a schematic view of 1-stage method blow molding according to the present disclosure.
Fig. 6 is a schematic view of a blow-molded bottle according to the present disclosure.

### DESCRIPTION OF THE EMBODIMENTS

In the present disclosure, the descriptions "XX or more and YY or less" and "XX to YY" representing numerical ranges each mean a numerical range including the lower limit and the upper limit that are end points, unless otherwise noted, and when numerical ranges are described step by step, optional combinations of the upper limits and the lower limits in the numerical ranges are also disclosed.

Hereinafter, embodiments for carrying out the present disclosure will be illustratively described in detail with reference to drawings. However, the scope is not limited to the following embodiments. In the description below, "%" means "% by mass" unless otherwise noted.

### <First embodiment>

The first embodiment is about a resin mixture.

The resin mixture of the present disclosure contains a binder resin, carbon black and a compound having a carbodiimide group, and mass of the carbon black is 1.0 part by mass or more and 20.0 parts by mass or less, and mass of the compound having a carbodiimide group is 3.0 parts by mass or more and 64.0 parts by mass or less, based on 100 parts by mass of the binder resin.

Hereinafter, each item will be described.

### (Binder resin)

The resin mixture of the present disclosure contains a binder resin. In the present disclosure, the binder resin is preferably a thermoplastic resin, is more preferably a polyester resin, and particularly preferably contains at least one selected from the group consisting of polyethylene terephthalate (PET) and polyethylene naphthalate (also referred to as "PEN" hereinafter). In the present disclosure, the structures of the chemical substances can be confirmed by a nuclear magnetic resonance method (NMR) or gas chromatography mass spectrometry (GC-MS).

PET is obtained by condensation reaction or transesterification of terephthalic acid or an ester forming derivative thereof with 1,2-ethanediol or an ester forming derivative thereof. The PET may be any of copolymerized PET and a homopolymer. The PET may be a mixture with another resin, but content of PET is desirably at least 60% by mass or more.

PEN is obtained by subjecting dimethyl 2,6-naphthalenedicarboxylate and ethylene glycol to transesterification to obtain a monomer: bishydroxyethylene-2,6-naphthalate and then subjecting the monomer to polycondensation reaction. The PEN may be a mixture with another resin, but content of PEN is desirably at least 60% by mass or more.

As the PET, PET that is commercially available as "TRN-8550FF" manufactured by Teijin Limited can be used. As the PEN, PEN that is commercially available as "TN8065S" manufactured by Teijin Limited can be used.

### (Carbon black)

The resin mixture of the present disclosure contains carbon black. Carbon black is a pigment using carbon as a raw material. Examples of the carbon blacks include acetylene black, furnace black, thermal black and channel black.

In the present disclosure, as the carbon black, at least one selected from the group consisting of acetylene black, furnace black, thermal black and channel black is preferably contained.

Carbon black has features that the carbon black is likely to become a crystal nucleus of a crystallized resin. The carbon black may be a processed pigment obtained by subjecting carbon black to surface treatment with copolymerized polyester, an olefin-based resin, metal soap, etc. As the carbon black, for example, one commercially available as "MA100" manufactured by Mitsubishi Chemical Corporation can be used. As the processed pigment, one commercially available as "Black EXC-8A1893" manufactured by Sumika Color Co., Ltd. can be used.

### (Compound having carbodiimide group)

The resin mixture of the present disclosure contains a compound having a carbodiimide group (-N=C=N-). In the present disclosure, the compound having a carbodiimide group is preferably polycarbodiimide (having a plurality of carbodiimide groups in a molecule). The polycarbodiimide can be produced by, for example, heating organic isocyanate in presence of a catalyst and performing decarboxylation condensation reaction.

Examples of the organic isocyanates include aliphatic diisocyanates, alicyclic diisocyanates and aromatic diisocyanates. Specific examples of the polycarbodiimides include aromatic polycarbodiimides, such as poly(4,4'-diphenylmethane carbodiimide), poly(p-phenylene carbodiimide), poly(m-phenylene carbodiimide), poly(diisopropylphenyl carbodiimide) and poly(triisopropylphenyl carbodiimide), and alicyclic polycarbodiimides, such as poly(dicyclohexylmethane carbodiimide). These polycarbodiimides may be used singly, or may be used in any combination of two or more.

Among these polycarbodiimides, aliphatic polycarbodiimides are preferable. As the aliphatic polycarbodiimides, for example, those commercially available as "Carbodilite HMV-15CA", "Carbodilite LA-1" and "Carbodilite HMV-5CA-LC" manufactured by Nisshinbo Chemical Inc. can be used.

In the present disclosure, the compound having a carbodiimide group preferably includes a compound represented by the following formula (1). 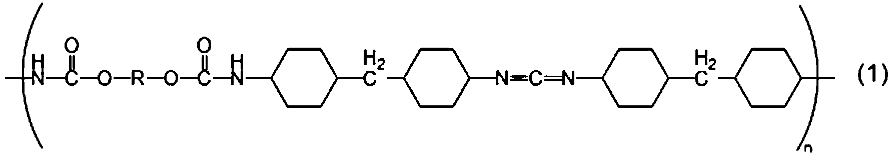 wherein R is an alkylene group having 1 to 12 carbon atoms, and n is an integer of 2 or more and 10 or less.

### (Others)

In the present disclosure, mass of the carbon black is 1.0 part by mass or more and 20.0 parts by mass or less based on 100 parts by mass of the binder resin, preferably 3.0 parts by mass or more and 10.0 parts by mass or less, more preferably 3.6 parts by mass or more and 8.3 parts by mass or less, based on 100 parts by mass of the binder resin.

In the present disclosure, further, mass of the compound having a carbodiimide group is 3.0 parts by mass or more and 64.0 parts by mass or less, preferably 15.0 parts by mass or more and 64.0 parts by mass or less, more preferably 18.3 parts by mass or more and 58.3 parts by mass or less, based on 100 parts by mass of the binder resin.

By doing as above, a biaxially oriented molded article of a thin and black-colored PET resin can be obtained from the resin mixture of the present disclosure. In the present disclosure, structures of the chemical substances and mass proportions thereof can be confirmed by a nuclear magnetic resonance method (NMR) or gas chromatography mass spectrometry (GC-MS).

### <Resin pellet>

The resin pellet of the present disclosure contains the resin mixture of the present disclosure. The resin pellet is one obtained by, for example, melting the resin mixture of the present disclosure in a resin extruder (single screw, twin-screw, etc.), then extruding the resin into strings (also referred to as strands), cooling the strings in a water tank, etc., and then cutting the strings into granules by a cutting apparatus called a strand cutter.

### <Preform>

The preform of the present disclosure contains the resin mixture of the present disclosure and a polyester resin. The preform is an intermediate product which is produced for biaxial orientation molding from the resin mixture of the present disclosure or the resin pellets of the present disclosure, and has a shape like a test tube. By setting this preform in a mold and blowing the preform with heating and thereby inflating the preform in the mold, a biaxially oriented molded article can be produced.

### <Biaxially oriented molded article>

The biaxially oriented molded article of the present disclosure contains the resin mixture of the present disclosure and a polyester resin. Regarding the biaxially oriented molded article of the present disclosure, while the preform of the present disclosure is kept at a prescribed temperature (for example, around 100°C in the case of PET resin), a gas is allowed to flow into the preform of the present disclosure to inflate the preform (to perform blow molding), and thereby, total length and diameter of the preform are increased, in other words, the preform has monoaxial orientation where total length is increased and monoaxial orientation where the diameter is increased.

A molded article which has been subjected to both the monoaxial orientations is referred to as a biaxially oriented molded article. Examples of typical molded articles of the biaxially oriented molded articles include PET bottles for beverages and PET bottles for various containers such as a soy source container, a cosmetic container and a toner container for putting copier toner thereinto, and the present disclosure can be applied to these uses.

### <Toner bottle>

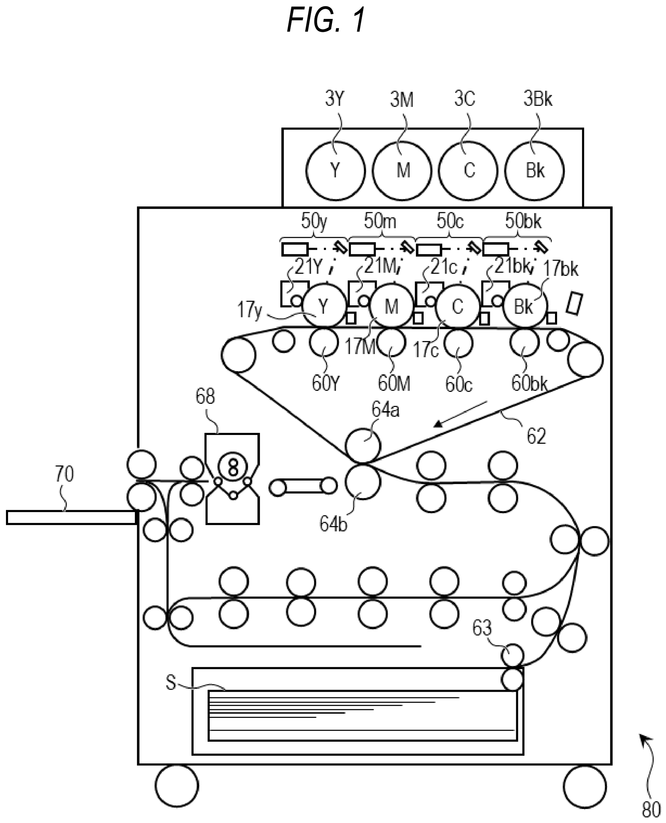

Hereinafter, the first embodiment of the present disclosure will be described with reference to drawings. Fig. 1 is a schematic configuration diagram illustrating a four-color image forming apparatus using an electrophotographic system, and includes a body of the image forming apparatus 80. This image forming apparatus 80 is an image forming apparatus of so-called intermediate transfer tandem type in which four-color image forming sections are arranged side by side on an intermediate transfer belt.

In this image forming apparatus 80, image formation is carried out in the following manner. First, in this image forming apparatus 80, electrostatic latent images are formed on photoconductor drums 17 (17y, 17m, 17c, 17bk) by exposure equipment 50 (50y, 50m, 50c, 50bk) based on print data. In this image forming apparatus 80, the electrostatic latent images formed are developed by development apparatuses 21 (21y, 21M, 21c, 21bk) to form toner images.

In this image forming apparatus 80, the toner images are transferred onto an intermediate transcript 62 by primary transfer apparatuses 60 (60Y, 60M, 60c, 60bk), and in secondary transfer sections 64 (64a, 64b), the toner images are transferred onto a sheet material S fed from a paper feeder 63. In this image forming apparatus 80, next, the toner images transferred onto the sheet material S are fixed to the sheet material S by a fixing unit 68, and thereafter, the sheet material is discharged onto a paper receiving tray 70.

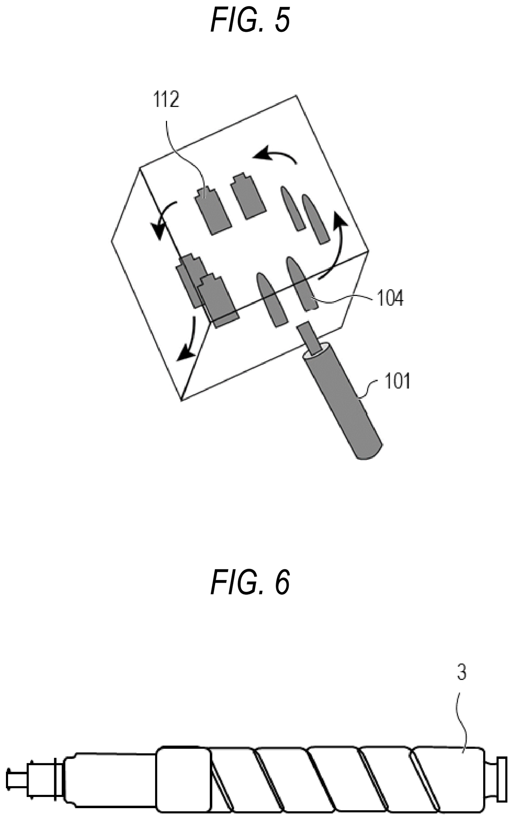

In this image forming apparatus 80, toner images are formed by the development apparatuses 21, and in order to feed toner to the development apparatuses 21, detachable toner bottles 3 (3Y, 3M, 3C, 3Bk) are utilized. The toner bottle of the present disclosure is the toner bottle 3 that is used in this manner. For reference, an example of the shape of the toner bottle 3 is illustrated in Fig. 6.

### <Second embodiment>

The second embodiment is about a method for producing a biaxially oriented molded article.

The method for producing a biaxially oriented molded article of the present disclosure includes making a resin pellet from a resin mixture, making a preform from the resin pellet and a polyester resin, and blow molding the preform, and the resin mixture contains a binder resin, carbon black and a compound having a carbodiimide group, and the mass of the carbon black is 1.0 part by mass or more and 20.0 parts by mass or less and the mass of the compound having a carbodiimide group is 3.0 parts by mass or more and 64.0 parts by mass or less, based on 100 parts by mass of the binder resin.

The items described in the first embodiment may overlap descriptions of the second embodiment, and therefore, the descriptions are sometimes omitted.

Next, an embodiment of the method for producing a resin mixture according to the present disclosure will be described.

### (Making of resin pellet)

The method for producing a biaxially oriented molded article includes making a resin pellet from a resin mixture. Firstly, a binder resin, carbon black and carbodiimide are melt kneaded, and thereafter, through extrusion and pelletizing, a resin mixture (sometimes described as "masterbatch" hereinafter) is produced.

The melt kneading unit is not particularly limited, and a known unit such as a twin-screw extruder can be adopted as illustrated in Fig. 4. As the twin-screw extruder, for example, PCM-46 (manufactured by Ikegai Corp) can be used. An extruder 201 has a screw inside, and by rotating the screw, the resin introduced into a hopper 202 can be melt kneaded.

To the hopper 202, a binder resin 203, carbon black 204 and carbodiimide 205 are constantly fed. The temperature for the melt kneading is not particularly restricted, but when the binder resin is a polyester resin, the melt kneading temperature is, for example, 200 to 300°C, preferably 240 to 280°C.

The resin which has been extruded into strings is passed through a water tank 207 to cool the resin and then cut with a cutter 206 to obtain a resin mixture 208 in the form of pellets.

The carbon black in the resin mixture has a function of coloring a toner bottle black. In order to color the toner bottle black, the carbon black needs to be mixed in an amount of 1.0 to 20.0 parts by mass based on 100 parts by mass of the binder resin.

The polycarbodiimide in the resin mixture has properties of reacting with the polyester resin that is a material of a toner bottle. The carbodiimide group of the polycarbodiimide is crosslinked with a terminal carboxyl group of the polyester resin. Polycarbodiimide has a plurality of carbodiimide groups, and hence, the carbodiimide groups can be bonded to a plurality of terminals of the polyester resin.

Carbon black usually becomes a crystal nucleus of the polyester resin and accelerates crystallization, but the molecular weight can be increased by the polycarbodiimide, and therefore, acceleration of the crystallization of the polyester resin can be slowed down. In order to obtain an effect of delaying the crystallization rate of the polyester resin, the carbodiimide needs to be added in an amount of 3.0 to 64.0 parts by mass based on 100 parts by mass of the binder resin in the resin mixture.

The resin mixture according to the present disclosure is used by mixing the resin mixture with the material of a toner bottle during the biaxial orientation blow molding described later.

A method of directly adding carbon black and polycarbodiimide to the polyester resin of a toner bottle without preparing a resin mixture of carbon black and polycarbodiimide in advance can be thought, but molding of a resin mixture of carbon black, polycarbodiimide and a binder resin can more suppress crystallization of carbon black.

When the resin mixture is molded, a small amount of polycarbodiimide is crosslinked with the binder resin in the resin mixture, and the molecular weight of the binder resin is increased. In the resin mixture, a large amount of a binder resin having a high molecular weight will exist around the carbon black.

If the resin mixture is added to the material of a toner bottle, the resin mixture is dispersed, but the resin mixture has created an environment where a large amount of a resin having a high molecular weight exists around the carbon black, and crystallization using the carbon black as a nucleus is not easily performed.

On the other hand, the method of making a resin pellet also includes a method of directly adding carbon black and polycarbodiimide to the polyester resin of a toner bottle without preparing a resin mixture of carbon black and polycarbodiimide in advance. In that case, carbon black comes into contact with a polyester resin that has not been crosslinked with polycarbodiimide, and crystallization of the polyester resin sometimes proceeds using carbon black as a nucleus.

The resin mixture according to the present disclosure is used by mixing the resin mixture with the material of a toner bottle during the biaxial orientation blow molding described later.

### (Making of preform)

The method for producing a biaxially oriented molded article of the present disclosure includes making a preform from a resin pellet and a polyester resin. An embodiment of a method for producing a preform by biaxial orientation blow molding using the resin mixture according to the present disclosure will be described below.

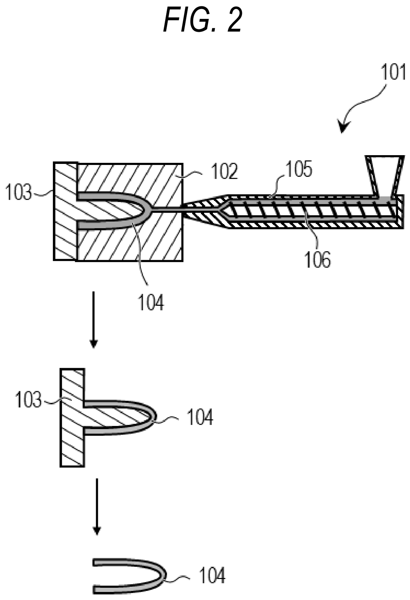

As illustrated in Fig. 2, a preform 104 having a shape like a test tube is molded by injection molding. Specifically, a material obtained by mixing a material of a toner bottle and a masterbatch in advance is introduced into an injection molding machine 101, the material is heated and melted by a heating cylinder 105, and the material in a molten state is injected into preform molds 102, 103 by a screw 106 to mold a preform 104.

The toner bottle is made of a polyester resin such as PET or PEN, and the binder resin of the masterbatch is preferably allowed to match the material of the toner bottle. In making the preform in the method for producing a biaxially oriented molded article of the present disclosure, mass of the resin pellet is preferably 0. 8 part by mass or more and 2.0 parts by mass or less, more preferably 1.1 parts by mass or more and 1.7 parts by mass or less, particularly preferably 1.4 parts by mass, based on 100 parts by mass of the polyester resin. By doing as above, a biaxially oriented molded article is much more easily produced by stretch blow molding in the method for producing a biaxially oriented molded article of the present disclosure.

The material of a toner bottle and the masterbatch that are in a molten state are agitated with a screw 106. Then, carbon black in the masterbatch is dispersed in the material of a toner bottle, and thus, a black preform 104 is molded.

In addition, the polycarbodiimide of the masterbatch reacts with the polyester resin as a toner bottle material. Specifically, a carbodiimide group and a terminal carboxyl group of the polyester resin are bonded to each other. Further, the polycarbodiimide has a plurality of carbodiimide groups in a molecule, and therefore,a plurality of polyester resins is bonded through the polycarbodiimide.

Usually, during the cooling process of the preform 104 started from immediately after completion of injection, crystallization proceeds because of amount of heat of the preform 104, but the polyester resin which has been increased in molecular weight by being bonded to polycarbodiimide has a low crystallization rate and can suppress crystallization of the preform 104.

### (Blow molding of preform)

The method for producing a biaxially oriented molded article of the present disclosure includes blow molding the preform. As illustrated in Fig. 3, biaxial orientation blowing (biaxial orientation molding) is carried out. First, the preform 104 is placed in a heating furnace 107 and heated up to a temperature that enables stretching.

The molecular weight is increased by the reaction of the polyester resin with polycarbodiimide here too, so that the crystallization rate is delayed, and when the heating time is within 3 minutes, the crystallization can be suppressed. After heating, the preform 104 heated is taken out of the heating furnace 107, and placed at the mouth of a blow mold 108 having a cavity inside, the cavity which has been formed by combining a left side mold 108-1 and a right side mold 108-2.

The preform is preferably set at a mouth of the blow mold 108 in a short time (for example, within 10 seconds) so that the temperature of the heated preform may not fall before the beginning of the biaxial orientation.

The preform 104 heated, which has been set inside the blow mold 108, is stretched in the vertical direction by using a stretching bar 109. This stretching is called primary stretching. In this case, a gas is preferably allowed to flow into the preform so that the preform 104 may not come into contact with the stretching bar 109, and the pressure of the gas in this case is called primary blow pressure.

After the primary stretching is carried out, a gas 110 is allowed to flow into the preform through a preform mouth 113 to inflate the preform in a horizontal direction (circumferential direction). This is called secondary stretching. Pressure of the gas in this case is called secondary blow pressure. Examples of the gasses blown into include air, nitrogen, carbon dioxide and argon.

By carrying out these primary stretching and secondary stretching, the preform 104 is inflated in the directions indicated by arrows 301 and comes into close contact with the inner wall of the blow mold 108, and in this state, the preform is cooled and solidified. Subsequently, the left side mold 108-1 and the right side mold 108-2 of the blow mold 108 are separated, and thereby, a blow-molded article 112 is taken out of the blow mold 108. In this blow-molded article 112, stretching in both vertical and horizontal directions has been performed, and hence, a molded article having high strength is obtained.

During the injection stretch blow molding process, it is important that the preform should be in the non-crystallized state (non-crystalline, i.e., amorphous state). If the preform is in the amorphous state and reaches a blow molding temperature, the preform is soft and deformable, and therefore, by carrying out blowing, that is, biaxial orientation molding, PET is stretched and crystallized in the stretched direction, and a bottle having high strength can be formed.

Examples of the injection stretch blow molding methods include a 1-stage method and a 2-stage method. The 1-stage method is a method in which utilizing residual heat of a preform immediately after taken out of the mold, the preform is subjected to stretch blow molding as it is or after temperature control. The 2-stage method is a method in which a preform is cooled down to room temperature once, and thereafter the preform is subjected to temperature control again to perform stretch blow molding.

In the 1-stage method, after the preform 104 is injection molded in the injection molding machine 101 as illustrated in Fig. 5, cooling in the injection molding is completed in a short time of 10 seconds or less so that the temperature of the preform 104 may not become a glass transition temperature of PET or less.

In this method, immediately thereafter, the preform is kept warm at a blow molding temperature (for example, 80°C to 120°C), heated and subjected to blow molding to obtain a blow-molded article 112 (blow-molded bottle). An injection molding apparatus integrated with a blow molding apparatus is used.

The 2-stage method is a method in which after injection molding of a preform, the preform is cooled down to a glass transition temperature of PET or less, taken out, and thereafter heated to a blow molding temperature (for example, 80°C to 120°C) by a different blow molding apparatus to perform blow molding. An injection molding apparatus and a blow molding apparatus that are separated from each other are used.

In the 1-stage method, the preform is not cooled down to the glass transition temperature or less, and therefore, the 1-stage method is preferable in that the energy for reheating is small, as in the 2-stage method. However, after the injection molding, time for keeping the preform at a crystallization temperature of PET is prolonged, so that crystallization of isothermal crystal of PET is more likely to proceed than in the 2-stage method. The crystallization temperature of this PET is about 130°C to 200°C.

On this account, in both the 1-stage method and the 2-stage method, the resin mixture of the present disclosure obtains the effect of delaying crystallization, but the effect particularly in the 1-stage method is higher.

### (Others)

In the method for producing a biaxially oriented molded article of the present disclosure, the resin mixture contains a binder resin, carbon black and a compound having a carbodiimide group, and mass of the carbon black is 1.0 part by mass or more and 20.0 parts by mass or less, preferably 3.0 parts by mass or more and 10.0 parts by mass or less, more preferably 3.6 parts by mass or more and 8.3 parts by mass or less, and mass of the compound having a carbodiimide group is 3.0 parts by mass or more and 64.0 parts by mass or less, preferably 15.0 parts by mass or more and 64.0 parts by mass or less, more preferably 18.3 parts by mass or more and 58.3 parts by mass or less, based on 100 parts by mass of the binder resin. Since descriptions for the above overlap the descriptions of the first embodiment, the descriptions are omitted.

### [Example 1]

Hereinafter, the present disclosure will be described in detail using examples. However, the present disclosure is not limited by these examples.

In the following examples, "%" means "% by mass" unless otherwise stated.

### <Molding of resin mixture>

Using a twin-screw extruder (PCM-46 manufactured by Ikegai Corp), the resin mixture was molded. While PET, carbon black and polycarbodiimide were constantly fed uniformly, the PET, carbon black and polycarbodiimide were melt kneaded. In this case, the mixing ratio between PET, carbon black and polycarbodiimide was changed as in Table 1.

After melt kneading at a melt kneading temperature of 260°C, a screw rotation speed of 250 rpm, a vent degassing pressure of -0.05 MPa and a discharge rate of 80 kg/h, the resulting resin mixture was pelletized. The carbon black and polycarbodiimide used here were powders. By subjecting the pelletized resin mixture to heat treatment of keeping the resin mixture at a temperature of 180°C for 4 hours, materials capable of being used in injection stretch blow molding were obtained. The materials are referred to as MB(1-1), MB(1-2) and MB(1-3).

**(Table 1)**

| Material | Mixing ratio | | |
|---|---|---|---|
| | MB(1-1) | MB(1-2) | MB(1-3) |
| PET (trade name: TRN-8550FF; manufactured by Teijin Limited) | 75.0% by mass | 82.0% by mass | 60.0% by mass |
| Carbon black (trade name: MA100; manufactured by Mitsubishi Chemical Corporation) | 5.0% by mass | 3.0% by mass | 5.0% by mass |
| Polycarbodiimide (trade name: Carbodilite HMV-15CA; manufactured by Nisshinbo Chemical Inc.) | 20.0% by mass | 15.0% by mass | 35.0% by mass |

### <Molding of blow-molded bottle>

PET that was a material of a toner bottle and the resin pellets MB(1-1), MB(1-2) or MB(1-3) were mixed in advance, and then introduced into a one-step stretch blow molding machine (ASB-70DPH manufactured by Nissei ASB machine Co., Ltd.).

This apparatus is for injection stretch blow molding by a 1-stage method. The mixing ratios between the material of a toner bottle and MB(1-1), MB(1-2) or MB(1-3) are shown in Table 2-1, Table 2-2 and Table 2-3. The materials described in Table 2-1 to Table 2-3 were used in dried state.

**(Table 2-1)**

| Material | Mixing ratio |
|---|---|
| PET (trade name: TRN-8550FF; manufactured by Teijin Limited) | 98.6% by mass |
| MB(1-1) | 1.4% by mass |

**(Table 2-2)**

| Material | Mixing ratio |
|---|---|
| PET (trade name: TRN-8550FF; manufactured by Teijin Limited) | 98.6% by mass |
| MB(1-2) | 1.4% by mass |

**(Table 2-3)**

| Material | Mixing ratio |
|---|---|
| PET (trade name: TRN-8550FF; manufactured by Teijin Limited) | 98.6% by mass |
| MB(1-3) | 1.4% by mass |

The one-step stretch blow molding machine mentioned above can continuously carry out obtaining a preform by injection molding and obtaining a bottle-shaped molded product by biaxial orientation blow molding of the preform.

In the molding machine, a screw diameter of the injection molding machine was 54 mm.

First, a mold capable of molding a preform having an outer diameter of 30 mm, a wall thickness of 3.7 mm and a length of 220 mm was prepared as a mold for preform molding. Then, a preform was molded under the following molding conditions.
- Screw diameter: 54 mm
- Screw position before filling cavity with resin mixture: 95 mm
- Injection speed
   Until screw is moved forward by 5 mm: 50% of maximum speed
   Until screw is moved forward by another 20 mm: 30% of maximum speed
   Until screw is moved forward by another 35 mm: 25% of maximum speed
   PV switching position: 35 mm
- Injection pressure
   - Until PV switching: 12.0 MPa
   - After PV switching: 4.5 MPa (pressure holding)
- Pressure holding time after PV switching
   - 4.57 seconds
- Heating cylinder temperature: 280°C
- Cooling time: 8.0 seconds
- Mold temperature: 18°C

In the injection molding machine, materials which are described in Table 2-1 to Table 2-3 were melted and kneaded, and thereby, preforms having been colored black with carbon black contained in MB(1-1), MB(1-2) and MB(1-3) were obtained. Color of MB(1-2) was lighter as compared with that of MB(1-1) and MB(1-3) because the mixing ratio of carbon black was low. From a viewpoint of designability, the material have no problem.

In addition, polycarbodiimide contained in MB(1-1), MB(1-2) and MB(1-3) was crosslinked with PET, so that molecular weight of PET was increased. As a result, crystallization was able to be delayed, and a non-crystallized soft preform was able to be molded. In MB(1-3), mixing ratio of polycarbodiimide was high, and therefore, crystallization was able to be more delayed as compared with crystallization in MB(1-1) and MB(1-2).

From the preform molding mold, the preform was taken out, and the preform was conveyed to a heat retention station of the one-step stretch blow molding machine. The heat retention conditions are as described below.
- Preform heat retention temperature
   Position of 10% of total length of preform from upper part of preform: 180°C
   Position of 25% of total length of preform from upper part of preform: 200°C
   Position of 50% of total length of preform from upper part of preform: 200°C
   Position of 75% of total length of preform from upper part of preform: 180°C

Subsequently, the preform which has been adjusted to the above temperature was placed in an interior of a mold, which has been carved in a shape of a toner bottle, and the preform was subjected to biaxial orientation blow molding to mold a toner bottle. The temperature of the mold had been adjusted to 18°C. The surface temperature of the preform immediately before the blow molding was 100°C.

A specific blow molding process will be described. Through an opening of the preform, a stretching bar was inserted inside and moved forward until the bar came into contact with a top of the preform. Then, air pressure to drive the stretching bar was set to 1.2 MPa to further move the stretching bar forward. 0.5 Seconds after the stretching bar was further moved forward, primary air was injected into the preform through an opening of the preform. The pressure of the primary air was set to 1.0 MPa.

Subsequently, 0.15 seconds after injection of the primary air, secondary air was introduced. The pressure of the secondary air was set to 2.9 MPa. Then, over a period of 7.0 seconds from beginning of introduction of primary air, air was injected inside the preform. Subsequently, the pressure inside the preform was returned to normal pressure over a period of 2.5 seconds. Thus, a thin and black toner bottle having an outer diameter of 60 mm, a wall thickness of 0.35 mm and a length of 440 mm was obtained.

### [Example 2]

### <Molding of resin mixture>

MB(1-1) was molded in a same manner as in Example 1.

### <Molding of blow-molded bottle>

As a material of a toner bottle, a recycled material was used. The recycled material is a material obtained by recovering a used PET bottle for beverage and crushing the bottle. Commercially available "HPR" manufactured by Pantech Corporation was used.

The crushed PET had a low bulk density and did not get caught in a screw of an injection molding machine of the biaxial orientation blow molding machine, so that in order to increase the bulk density, the PET was melt kneaded by an extruder.

According to the formulation in Table 3, melt kneading was carried out by a twin-screw extruder (PCM-46 manufactured by Ikegai Corp). The extrusion conditions are as described below.
Temperature: 260°C
Screw rotation speed: 20 rpm
Discharge rate: 50 kg/h

**(Table 3)**

| Material | Mixing ratio |
|---|---|
| Recycled PET | 100.0% by mass |
| (trade name: HPR; manufactured by Pantech Corporation) | |

The material which has been melt kneaded and pelletized under the above conditions was subjected to heat treatment of keeping the material at a temperature of 180°C for 4 hours to mold pellets for injection molding. This material is referred to as PCR(2-1). The IV value of PCR(2-1) was 0.64 dL/g.

After PCR(2-1) of the recycled PET and MB(1-1) were mixed in advance, the mixture was introduced into a one-step stretch blow molding machine (ASB-70DPH manufactured by Nissei ASB machine Co., Ltd.). The mixing ratio between PCR(2-1) and MB(1-1) is shown in Table 4. The materials described in Table 4 were introduced into the molding machine in dried state.

**(Table 4)**

| Material | Mixing ratio |
|---|---|
| PCR(2-1) | 98.6% by mass |
| MB(1-1) | 1.4% by mass |

Preform molding of the one-step stretch blow molding was carried out in the same manner as in Example 1.

By a screw of an injection molding machine, PCR(2-1) and MB(1-1) were melt kneaded. Then, a preform which has been colored black with carbon black contained in MB(1-1) was obtained.

In addition, polycarbodiimide contained in MB(1-1) was crosslinked with PET of PCR(2-1), so that the molecular weight of PET was increased. The molecular weight of PCR(2-1) was increased, and hence, even when carbon black that became a crystal nucleus was contained, the crystallization rate was able to be decreased, and a soft preform was obtained at a blow molding temperature.

By blow molding this preform in the same manner as in Example 1, a toner bottle having black color derived from the recycled material and having an outer diameter of 60 mm, a wall thickness of 0.35 mm and a length of 440 mm was obtained.

### [Example 3]

### <Molding of resin mixture>

Using the same twin-screw extruder and the same molding conditions as in Example 1, a resin mixture was molded. While PET, carbon black and polycarbodiimide were constantly fed uniformly at the mixing ratio of Table 5, the PET, carbon black and polycarbodiimide were melt kneaded, and as the carbon black, a powdery processed pigment was used. By subjecting the pelletized resin mixture to heat treatment of keeping the resin mixture at a temperature of 180°C for 4 hours, a material capable of being used in injection stretch blow molding was obtained. This material is referred to as MB(3-1).

**(Table 5)**

| Material | Mixing ratio |
|---|---|
| PET (trade name: TRN-8550FF; manufactured by Teijin Limited) | 75.0% by mass |
| Carbon black (processed pigment) (trade name: Black EXC-8A1893; manufactured by Sumika Color Co., Ltd.) | 5.0% by mass |
| Polycarbodiimide (trade name: Carbodilite HMV-15CA; manufactured by Nisshinbo Chemical Inc.) | 20.0% by mass |

### <Molding of blow-molded bottle>

After PET that was a material of a toner bottle and MB(3-1) were mixed in advance, the mixture was introduced into a one-step stretch blow molding machine (ASB-70DPH manufactured by Nissei ASB machine Co., Ltd.). The mixing ratio between the material of a toner bottle and MB(3-1) is shown in Table 6. The materials described in Table 6 were used in dried state.

**(Table 6)**

| Material | Mixing ratio |
|---|---|
| PET (trade name: TRN-8550FF; manufactured by Teijin Limited) | 98.6% by mass |
| MB (3-1) | 1.4% by mass |

By a screw of an injection molding machine, PET and MB(3-1) were melt kneaded. Then, a preform which has been colored black with carbon black contained in MB(3-1) was obtained. The polycarbodiimide contained in MB(3-1) was crosslinked with PET, and the molecular weight of PET was increased.

The carbon black used herein was a processed pigment a surface of which had been coated with a resin. On that account, the carbon black and PET rarely came into direct contact with each other, and the carbon black did not function as a crystal nucleus of PET.

The molecular weight of PET was increased as above, and in addition, the coated carbon black was used, so that the crystallization rate of a preform was able to be more delayed than the crystallization rate in Example 1 and Example 2. The preform molded by this technique became soft even at a blow molding temperature.

By blow molding this preform in the same manner as in Example 1, a toner bottle having black color derived from the recycled material and having an outer diameter of 60 mm, a wall thickness of 0.35 mm and a length of 440 mm was obtained.

### [Example 4]

### <Molding of resin mixture>

In Examples described so far, cases where the binder resin and the material of the biaxially oriented molded article are each PET are shown, but also in the case of PEN, the same effects can be exerted. Using the same twin-screw extruder and the same molding conditions as in Example 1, a resin mixture was molded.

PEN was used as a binder resin, and while PEN, carbon black and polycarbodiimide were constantly fed uniformly, the PEN, carbon black and polycarbodiimide were melt kneaded. By subjecting the pelletized resin mixture to heat treatment of keeping the resin mixture at a temperature of 180°C for 4 hours, a material capable of being used in injection stretch blow molding was obtained. This material is referred to as MB(4-1).

**(Table 7)**

| Material | Mixing ratio |
|---|---|
| PEN (trade name: TN8065S; manufactured by Teijin Limited) | 75.0% by mass |
| Carbon black (trade name: MA100; manufactured by Mitsubishi Chemical Corporation) | 5.0% by mass |
| Polycarbodiimide (trade name: Carbodilite HMV-15CA; manufactured by Nisshinbo Chemical Inc.) | 20.0% by mass |

### <Molding of blow-molded bottle>

After PEN and MB(4-1) were mixed in advance, the mixture was introduced into a one-step stretch blow molding machine (ASB-70DPH manufactured by Nissei ASB machine Co., Ltd.). The mixing ratio between PEN and MB(4-1) is shown in Table 8. The materials described in Table 8 were used in dried state.

**(Table 8)**

| Material | Mixing ratio |
|---|---|
| PEN (trade name: TN8065S; manufactured by Teijin Limited) | 98.6% by mass |
| MB (4-1) | 1.4% by mass |

Preform molding of the one-step stretch blow molding was carried out in the same manner as in Example 1.

By a screw of an injection molding machine, PET and MB(4-1) were melt kneaded. Then, a preform which has been colored black with carbon black contained in MB(4-1) was obtained.

In addition, polycarbodiimide contained in MB(4-1) was crosslinked with PEN, and the molecular weight of PEN was increased. The molecular weight of PEN was increased, and hence, even when carbon black that became a crystal nucleus was contained, the crystallization rate was able to be decreased, and a soft preform was obtained at a blow molding temperature.

From the preform molding mold, the preform was taken out, and the preform was conveyed to a heat retention station of the one-step stretch blow molding machine. The heat retention conditions are as described below.
- Preform heat retention temperature
   Position of 10% of total length of preform from upper part of preform: 270°C
   Position of 25% of total length of preform from upper part of preform: 300°C
   Position of 50% of total length of preform from upper part of preform: 300°C
   Position of 75% of total length of preform from upper part of preform: 270°C

Subsequently, the preform which has been adjusted to the above temperature was placed in the interior of a mold, the interior which has been carved in the shape of a toner bottle, and the preform was subjected to biaxial orientation blow molding to mold a toner bottle. The temperature of the mold had been adjusted to 18°C. The surface temperature of the preform immediately before the blow molding was 150°C.

A specific blow molding process will be described. Through an opening of the preform, a stretching bar was inserted inside and moved forward until the bar came into contact with the top of the preform. Then, air pressure to drive the stretching bar was set to 1.2 MPa to further move the stretching bar forward. 0.5 Seconds after the stretching bar was further moved forward, primary air was injected into the preform through the opening of the preform. The pressure of the primary air was set to 1.0 MPa.

Subsequently, 0.15 seconds after injection of the primary air, secondary air was introduced. The pressure of the secondary air was set to 2.9 MPa. Then, over a period of 7.0 seconds from the beginning of introduction of primary air, air was injected inside the preform.

Subsequently, the pressure inside the preform was returned to normal pressure over a period of 2.5 seconds. Thus, a thin and black biaxially oriented molded article including PEN having higher heat resistance, gas barrier properties and mechanical strength than PET and having an outer diameter of 60 mm, a wall thickness of 0.35 mm and a length of 440 mm was obtained.

The technique described in the present specification is a technique capable of contributing to realizing a sustainable society such as a decarbonized/recycling-based society.

Various embodiments have been described in detail above but it will be understood that the present disclosure is not limited to these embodiments and encompasses all modifications, variants, alternatives and equivalents falling within the scope of the appended claims.

## Claims

1. A resin mixture comprising:
a binder resin;
carbon black; and
a compound having a carbodiimide group,
wherein a mass of the carbon black is 1.0 part by mass or more and 20.0 parts by mass or less, and a mass of the compound having the carbodiimide group is 3.0 parts by mass or more and 64.0 parts by mass or less, based on 100 parts by mass of the binder resin.

2. The resin mixture according to claim 1, wherein the binder resin is a thermoplastic resin.

3. The resin mixture according to claim 1 or 2, wherein the binder resin is a polyester resin.

4. The resin mixture according to any one of claims 1 to 3, wherein the binder resin comprises at least one selected from the group consisting of polyethylene terephthalate (PET) and polyethylene naphthalate (PEN).

5. The resin mixture according to any one of claims 1 to 4, wherein the carbon black comprises at least one selected from the group consisting of acetylene black, furnace black, thermal black and channel black.

6. The resin mixture according to any one of claims 1 to 5, wherein the compound having the carbodiimide group is polycarbodiimide.

7. The resin mixture according to any one of claims 1 to 6, wherein the compound having the carbodiimide group comprises a compound represented by formula (1): 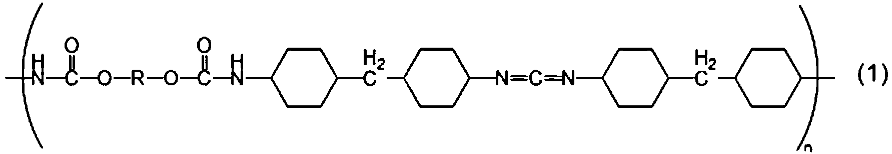 wherein R is an alkylene group having 1 to 12 carbon atoms, and n is an integer of 2 or more and 10 or less.

8. A preform comprising the resin mixture according to any one of claims 1 to 7 and a polyester resin.

9. A biaxially oriented molded article comprising the resin mixture according to any one of claims 1 to 7 and a polyester resin.

10. A resin pellet comprising the resin mixture according to any one of claims 1 to 7.

11. A method for producing a biaxially oriented molded article, comprising steps of:
making a resin pellet from a resin mixture;
making a preform from the resin pellet and a polyester resin; and
blow molding the preform; wherein
the resin mixture comprises a binder resin, carbon black and a compound having a carbodiimide group, and
a mass of the carbon black is 1.0 part by mass or more and 20.0 parts by mass or less, and a mass of the compound having the carbodiimide group is 3.0 parts by mass or more and 64.0 parts by mass or less, based on 100 parts by mass of the binder resin.

12. The method for producing a biaxially oriented molded article according to claim 11, wherein a mass of the resin pellet is 0.8 part by mass or more and 2.0 parts by mass or less based on 100 parts by mass of the polyester resin in the step of making the preform.
